# FASCICULE DE BREVET EUROPEEN

(11) **EP 1 929 425 B1**
(45) Date de publication et mention de la délivrance du brevet: **05.11.2014**
(21) Numéro de dépôt: 06795781.1
(22) Date de dépôt: 25.08.2006
(51) Int. Cl.: G06K 19/07, G06F 21/35, G06K 19/077

(54) **ELEMENT COMBINANT UNE CLE USB ET UN LECTEUR RFID**
EINEN USB-SCHLÜSSEL UND EINEN RFID-LESER KOMBINIERENDES ELEMENT
ELEMENT COMBINING A USB KEY AND AN RFID READER

(30) Priorité: 25.08.2005 CH 13882005
(43) Date de publication de la demande: 11.06.2008
(73) Titulaire: IDtek Track-and-Trace S.A., 1005 Lausanne (CH)
(72) Inventeur: ZIELASCH, Andreas, D-82256 Fürstenfeldbruck (DE)
(74) Mandataire: Grosfillier, Philippe
(86) Numéro de dépôt international: PCT/IB2006/052960
(87) Numéro de publication internationale: WO 2007/023473

(56) Documents cités:
- EP-A- 1 260 931
- EP-A- 1 675 076
- EP-A2- 1 705 597
- WO-A-2005/050384
- WO-A-2006/103510
- WO-A1-01/57811
- DONALD MELANSON: "Tradewind's SD card RFID reader" INTERNET CITATION, [Online] 3 mars 2005 (2005-03-03), XP002387745 Extrait de l'Internet: URL:http://www.engadget.com/2005/03/03/tra dewinds-sd-card-rfid-reader/> [extrait le 2006-06-28]

## Description

### Domaine de l'invention

La présente invention concerne les applications liées à l'identification par radio fréquence que l'on cite souvent au moyen de son abréviation anglaise RFID (Radio Frequency IDentification).

### Etat de la technique

La technologie RFID permet d'identifier des objets ou des personnes en utilisant une puce mémoire ou un dispositif électronique capables, à l'aide d'une antenne radio, de transmettre des informations à un lecteur spécialisé, communément nommé lecteur RFID. La puce mémoire et le dispositif précités sont communément appelés transpondeur RFID, tag ou identifiant.

Le lecteur RFID peut être connecté à un ordinateur afin de lui transférer des informations de lecture. A cet effet, le lecteur RFID peut être relié à un ordinateur au moyen d'un câble muni d'une prise USB (Universal Serial Bus).

Ce type de dispositif possède cependant des inconvénients. Pour être opérationnel, il importe que l'ordinateur sur lequel est connecté le lecteur RFID soit au préalable configuré, notamment en installant un pilote ou driver du lecteur RFID. L'installation du pilote sur l'ordinateur se fait soit normalement au moyen d'un support de mémoire distinct tel que CD ROM, soit par téléchargement, pour autant qu'une connexion internet soit disponible.

Si le lecteur RFID doit être connecté à un autre ordinateur, respectivement à un autre système d'exploitation, tel que MS Windows, une nouvelle installation du pilote est nécessaire et ainsi de suite chaque fois qu'un autre ordinateur doit être utilisé.

Suivant l'endroit où l'on se trouve, il n'existe pas de CD ROM contenant le pilote du lecteur RFID et la connexion internet n'est pas fonctionnelle. Par ailleurs, l'utilisateur n'est pas souvent suffisamment familier pour effectuer de tels installations. Dans un tel cas, le transfert des données entre le lecteur RFID et l'ordinateur n'est pas possible ou implique des mesures trop coûteuses.

Le document WO2005/050384, qui représente l'état de la technique le plus proche de l'objet de la revendication 1, divulgue une clé USB comprenant aussi un lecteur RFID, les deux étant structurellement et fonctionnellement interconnectés entre eux.

### Description de l'invention

Un des buts de l'invention vise à remédier aux inconvénients précités.

A cet effet, l'invention concerne un élément, p.ex. boîtier, comprenant une clé USB et un lecteur RFID structurellement et fonctionnellement interconnectés entre eux, selon la revendication 1.

Une clé USB (Universal Serial Bus) est un support amovible de taille réduite, contenant une mémoire flash et prenant souvent la forme d'une clé ou d'un porte-clés, qui permet de stocker et de transporter des données, dans le but de les transférer d'un ordinateur à un autre, en s'insérant dans les ports USB.

Avantageusement, la mémoire de la clé USB selon l'invention comprend le pilote du lecteur RFID. De la sorte, il devient possible de se connecter à n'importe quel ordinateur (fixe, portable, miniaturisé, combiné à un téléphone- smartphone, etc...) comprenant un port USB, d'installer le pilote du lecteur RFID sur l'ordinateur et de réaliser le transfert des données entre le lecteur RFID, respectivement l'identifiant RFID, et l'ordinateur. Une fois installé, le pilote permet l'opération du lecteur RFID même si ce dernier a été déconnecté entre temps.

Selon un mode préférentiel de l'invention, une partie de la mémoire de la clé USB est dédiée au stockage préconfiguré de données servant à la réalisation des fonctions de l'application prévue, tel que la connexion automatique sur un site internet, notamment sur une page particulière. La mémoire de la clé peut également stocker des données obtenues par le lecteur RFID, comme par exemple des données d'accès à une page Internet protégée par mot de passe.

La mémoire de la clé USB peut également contenir d'autres logiciels destinés au fonctionnement du lecteur RFID, p.ex. des firmware.

L'invention n'est pas limitée à une forme particulière de clé USB. De même, elle n'est pas limitée à une forme particulière de connexion, à l'intérieur de la clé, entre la mémoire flash et le lecteur RFID.

Il convient de relever que l'invention ne représente pas une simple juxtaposition ou un assemblage de deux objets faisant déjà partie de l'état de la technique, un lecteur RFID et une clé USB. Elle consiste en un nouvel objet dans lequel on tire parti des avantages offerts par une clé USB et un lecteur RFID de manière à obtenir une interaction fonctionnelle. L'effet technique qui résulte de cette interaction fonctionnelle va au-delà de la somme des effets techniques produits individuellement par un lecteur RFID et une clé USB.

Dans l'objet selon l'invention, un élément (en particulier la prise USB, la mémoire flash, et l'électronique de contrôle dans une moindre mesure) peut être utilisé à la fois pour le fonctionnement "clé USB" et pour le fonctionnement "lecteur RFID". Par ailleurs, la synergie réalisée par la clé USB et le lecteur RFID offre au moins une nouvelle fonction, à savoir l'installation automatisée d'un lecteur RFID sur pratiquement n'importe quel ordinateur par un utilisateur sans connaissance particulière en informatique. De plus, le stockage de codes d'accès sur la mémoire d'un identifiant RFID permet d'obtenir un niveau de sécurité équivalent à un code PIN bancaire, mais sans devoir mémoriser le code pour les pages internet à vocation transactionnelle.

En effet, un lecteur RFID muni d'une prise USB nécessite un pilote (driver) qui doit être installé sur l'ordinateur avec lequel ce lecteur interagit. Dans ce contexte, la mémoire de la clé USB permet de stocker le pilote.

En outre, du fait de la grande capacité de mémoire d'une clé USB, différents pilotes, chacun adapté à chaque type de système d'exploitation (Exemple : MacIntosh et Windows, Linux, etc) et à chaque version de système d'exploitation (Exemple : Microsoft Windows XP Professional Version 2002 Service Pack xx) peuvent être logés dans la clé USB. Lors de la première connexion de l'objet selon l'invention à un ordinateur, l'installation du bon pilote peut être effectuée d'une manière automatisée. Par ailleurs, les pilotes peuvent être configurés en fonction des besoins d'un client.

Une fois le pilote installé, la configuration préalable de ce dernier permet d'amener un utilisateur final sur une page Internet (p.ex. celle du client) protégée par code d'accès, ceci par simple présentation de l'identifiant RFID au lecteur RFID, l'objet de l'invention. Cette énorme simplification et réduction du temps d'accès est possible par l'exécution automatique des routines suivantes:
A) Lancement d'un explorateur (Windows Explorer ou autre)
B) Inscription de l'adresse Internet (du client, configuré préalablement dans tous les pilotes contenus dans la mémoire de l'invention)
C) Ouverture de la bonne page à l'intérieur du site Internet désiré
D) Inscription d'un nom d'utilisateur et d'un code d'accès dans les champs prévus dans cette page d'accès ou l'interface de log-in (à partir de la mémoire de l'identifiant RFID interrogé par le lecteur RFID)
E) Confirmation de l'inscription des codes par un signe du type « carriage retum », afin que la page d'accès protégée ou toute page connexe s'ouvre sans autre manipulation que la présentation initiale de l'identifiant.

Ainsi, l'objet selon l'invention présente des caractéristiques structurelles et fonctionnelles qui sont nouvelles et qui ne résultent pas d'un assemblage ou d'une simple juxtaposition de caractéristiques déjà connues en soi.

L'invention peut être utilisée dans divers domaines. A titre d'exemple, on peut citer les systèmes de commande d'articles de consommation dans lesquels les clients sont munis d'un identifiant RFID (RFID tag) qui leur permet d'effectuer des achats dans un commerce. La présentation d'un identifiant RFID autorisé à l'objet selon l'invention, lui-même interagissant avec l'ordinateur du commerçant, voire un ordinateur appartenant à un tiers sur lequel le pilote approprié aurait été préalablement installé, permet d'accéder au site Internet de la société et de s'identifier d'une manière confortable, sûre et sécurisée afin de passer commande des articles avec le même identifiant qu'aux points de vente usuels. L'identification se fait alors de préférence par un mot de passe et un code d'utilisateur stocké et crypté dans l'identifiant RFID.

L'objet selon l'invention offre donc en particulier la possibilité d'équiper un parc d'ordinateurs hétéroclites avec un lecteur RFID pouvant être installé par des personnes n'ayant pas de connaissances particulières en informatique, ce qui leur permet ensuite de se raccorder à un site particulier et de s'y identifier d'une manière automatisée. Les clients étant des sociétés souhaitant augmenter leur transactions commerciales, en particulier leur chiffre d'affaires, ou plus généralement leur trafic internet.

L'invention permet offre une connexion simplifiée, conviviale et rapide à un site Internet, tout en offrant une facilité d'installation et un très haut niveau de sécurité.

Par ailleurs, l'utilisateur final n'a plus besoin de retenir des adresses internet, de se souvenir des chemins de navigation en interne ou en externe du site recherché, ni de ses codes d'accès qui sont stockés d'une manière sure dans la mémoire de l'identifiant RFID.

En cas d'itinérance, l'utilisateur dispose grâce à l'invention d'un moyen d'accéder à un site internet désiré depuis n'importe quel ordinateur de son choix, le tout de manière automatisée.

Il convient de relever que l'invention ne se limite pas aux exemples et modes de réalisation discutés précédemment.

A cet effet, par "clé USB", il faut comprendre plus généralement tout système compact, portable, constitué principalement d'une fiche pouvant être insérée dans un ordinateur et d'une mémoire permettant de stocker des données et/ou des programmes. Ainsi, la mémoire de la clé selon l'invention n'est-elle pas forcément du type flash.

De même, la mémoire peut également contenir des données/programmes autres que pilotes, codes d'accès, etc... qui ont été décrites de manière explicite dans le présent texte.

## Revendications

1. Elément, tel que boîtier, comprenant une clé USB, ladite clé ayant au moins une mémoire et une prise USB, et un lecteur RFID structurellement et fonctionnellement interconnectés entre eux, caractérisé ce que ladite mémoire de la clé contient au moins un logiciel pilote du lecteur RFID de sorte que ledit pilote peut être installé directement sur un appareil auquel l'élément est branché permettant une interaction entre ledit appareil et ledit lecteur.

2. Elément selon la revendication 1 **caractérisée par le fait qu'**il comprend des moyens pour assurer une installation automatisée dudit pilote lors de la première connexion de l'élément à un ordinateur.

3. Elément selon la revendication 1 ou 2 **caractérisé par le fait qu'**il comprend des moyens autorisant une connexion automatique à un réseau local ou distant une fois ledit pilote installé.

4. Elément selon l'une quelconque des revendications précédentes **caractérisé par le fait que** la mémoire flash de la clé comprend un pilote permettant d'adresser des pages internet particulières et dans ces pages, des champs particuliers, tels que champs d'identification d'utilisateur et/ou d'introduction d'un code d'accès.

5. Elément selon l'une quelconque des revendications précédentes comprenant une seule prise USB pour assurer à la fois la fonction "clé USB" et la fonction "lecteur RFID".

6. Elément selon l'une quelconque des revendications précédentes comprenant une seule unité électronique de contrôle contenant à la fois la fonction "clé USB" et la fonction "lecteur RFID".

7. Ensemble comprenant un élèment selon l'une quelconque des revendications précédentes et un identifiant RFID ledit identifiant comportant un ou des codes d'identification et de sécurisation d'accès informatique.

## Patentansprüche

1. Element wie etwa ein Gehäuse, das einen USB-Stick, wobei der Stick wenigstens einen Speicher und einen USB-Stecker besitzt, und einen RFID-Leser, die strukturell und funktional miteinander verbunden sind, umfasst, **dadurch gekennzeichnet, dass** der Speicher des Sticks wenigstens eine Treibersoftware für den RFID-Leser enthält, derart, dass der Treiber direkt in einem Gerät installiert werden kann, an das das Element ange-schlossen ist, was eine Wechselwirkung zwischen dem Gerät und dem Leser ermöglicht.

2. Element nach Anspruch 1, **dadurch gekennzeichnet, dass** es Mittel umfasst, um eine automatische Installation des Treibers beim ersten Anschließen des Elements mit einem Rechner sicherzustellen.

3. Element nach Anspruch 1 oder 2, **dadurch gekennzeichnet, dass** es Mittel umfasst, um einen automatischen Anschluss an ein lokales Netz oder ein Fernnetz zuzulassen, sobald der Treiber installiert ist.

4. Element nach einem der vorhergehenden Ansprüche, **dadurch gekennzeichnet, dass** der Flash-Speicher des Sticks einen Treiber enthält, der ermöglicht, bestimmte Internet-Seiten und auf diesen Seiten bestimmte Felder wie etwa Felder zum Identifizieren eines Anwenders und/oder zum Eingeben eines Zugangscodes zu adressieren.

5. Element nach einem der vorhergehende Ansprüche, das einen einzigen USB-Stecker umfasst, um zugleich die Funktion "USB-Stick" und die Funktion "RFID-Leser" sicherzustellen.

6. Element nach einem der vorhergehenden Ansprüche, das eine einzige elektronische Steuereinheit umfasst, die zugleich die Funktion "USB-Stick" und die Funktion "RFID-Leser" umfasst.

7. Anordnung, die ein Element nach einem der vorhergehenden Ansprüche und einen RFID-Identifizierer umfasst, wobei der Identifizierer einen oder mehrere Identifizierungs- und Sicherungscodes für einen Datenzugriff enthält.

## Claims

1. Element, such as housing, comprising a USB key, said key having at least one memory and a USB socket, and an RFID reader structurally and functionally interconnected together, **characterized in that** said memory of the key contains at least one driver software for the RFID reader so that said driver can be installed directly on an apparatus into which the element is plugged allowing an interaction between the said apparatus and the said reader.

2. Element according to Claim 1, **characterized in that** it comprises means for ensuring automated installation of said driver upon the first connection of the element to a computer.

3. Element according to Claim 1 or 2, **characterized in that** it comprises means permitting automatic connection to a local or remote network once said driver has been installed.

4. Element according to any one of the preceding claims, **characterized in that** the flash memory of the key comprises a driver making it possible to address particular Internet pages and in these pages, particular fields, such as fields for user identification and/or for access-code entry.

5. Element according to any one of the preceding claims, comprising a single USB socket to ensure both the "USB key" function and the "RFID reader" function.

6. Element according to any one of the preceding claims, comprising a single electronic control unit containing both the "USB key" function and the "RFID reader" function.

7. Assembly comprising an element according to any one of the preceding claims and an RFID identifier, said identifier comprising one or more identification and security computer-access codes.
